# EUROPEAN PATENT SPECIFICATION

(11) **EP 4 648 275 B1**
(45) Date of publication and mention of the grant of the patent: **19.08.2026**
(21) Application number: 24791268.6
(22) Date of filing: 23.07.2024
(51) Int. Cl.: H02S 20/32, H02S 20/10

(54) **FLEXIBLE PHOTOVOLTAIC TRACKING BRACKET**
FLEXIBLE PHOTOVOLTAISCHE VERFOLGUNGSKLAMMER
SUPPORT DE SUIVI PHOTOVOLTAÏQUE FLEXIBLE

(30) Priority: 29.03.2024 CN 202410371079
(43) Date of publication of application: 12.11.2025
(73) Proprietor: Arctech Solar Holding Co., Ltd., Kunshan Suzhou, Jiangsu 215331 (CN)
(72) Inventor: PENG, Yinghai, Suzhou, Jiangsu 215331 (CN); LIU, Haijun, Suzhou, Jiangsu 215331 (CN); YANG, Ying, Suzhou, Jiangsu 215331 (CN)
(74) Representative: Michalski Hüttermann & Partner mbB
(86) International application number: PCT/CN2024/106904
(87) International publication number: WO 2025/200199

(56) References cited:
- CN-A- 113 445 668
- CN-A- 113 678 368
- CN-A- 114 865 995
- CN-A- 116 054 690
- CN-A- 116 722 809
- CN-A- 116 722 809
- CN-A- 118 249 717
- CN-U- 218 940 985
- US-A1- 2022 149 774

## Description

### CROSS-REFERENCE TO RELATED APPLICATION

The present invention claims priority of a Chinese Patent Application No. 202410371079.2, filed on March 29, 2024 and titled "FLEXIBLE PHOTOVOLTAIC TRACKING BRACKET".

### TECHNICAL FIELD

The present invention relates to the technical field of flexible photovoltaic brackets, in particular to a flexible photovoltaic tracking bracket.

### BACKGROUND

The mainstream flexible photovoltaic tracking brackets in the market usually use a three-rope system with triangular support. When the assembly rotates to a larger inclination angle, the center of gravity of the entire system deviates from the center of rotation, generating torque. After running for a period of time, the installation plane of the assembly will be twisted and deformed, which not only affects the stability, but also affects the power generation of the assembly and affects the aesthetics. In addition, it will also cause the motor current of the rotary driving mechanism to increase, which can easily cause motor overcurrent and increase the cost of use.

CN 218 940 985 U discloses a flexible support cable structure including a first load-bearing cable, a second load-bearing cable, a first stabilizing cable, a second stabilizing cable, and a plurality of support trusses. Ends of the first load-bearing cable and the second load-bearing cable are fixed to form a support body for carrying a photovoltaic module. The first stabilizing cable and the second stabilizing cable are located below the corresponding first load-bearing cable and second load-bearing cable, respectively, with their ends fixed. The plurality of support trusses are spaced apart in a space enclosed by the first load-bearing cable, the second load-bearing cable, the first stabilizing cable, and the second stabilizing cable. Each corner of the support trusses is connected to the first load-bearing cable, the second load-bearing cable, the first stabilizing cable, and the second stabilizing cable, respectively.

Therefore, it is desirable to provide a new flexible photovoltaic tracking bracket to solve the above problems.

### SUMMARY

An object of the present invention is to provide a flexible photovoltaic tracking bracket in which a photovoltaic module is not easily twisted, thereby effectively improving the structural stability and ensuring the power generation.

In order to achieve the above object, the present invention adopts the following technical solutions:
a flexible photovoltaic tracking bracket, including:
a plurality of basic structures fixed to a ground at intervals;
a plurality of beam structures installed to the base structures;
a driving device installed to the beam structure and configured to drive the beam structure to rotate around an axis;
a rope structure connecting adjacent beam structures; the rope structure including assembly ropes and stabilizing ropes; the stabilizing ropes being located below the assembly ropes; the assembly ropes being configured to be fixedly connected to a photovoltaic module; the assembly ropes including a first assembly rope and a second assembly rope which are disposed along a left-right direction; the stabilizing ropes including a first stabilizing rope and a second stabilizing rope which are disposed along the left-right direction; and
a support frame connected to the assembly ropes and the stabilizing ropes;
wherein the first stabilizing rope is in an arc shape that curves in an upper right direction, and/or, the second stabilizing rope is in an arc shape that curves in an upper left direction; and, as viewed in a direction perpendicular to a plane where the first assembly rope and the second assembly rope are located, the assembly ropes are located between the first stabilizing rope and the second stabilizing rope.

As a further improved technical solution of the present invention, as viewed along a cross section of the rope structure, the first stabilizing rope and the second stabilizing rope are symmetrical with respect to a mid-perpendicular line which is perpendicular to a connecting line connecting the first assembly rope and the second assembly rope.

As a further improved technical solution of the present invention, the support frame includes a first cross rod, a second cross rod, a first side rod and a second side rod; the first cross rod connects the first assembly rope and the second assembly rope; the second cross rod connects the first stabilizing rope and the second stabilizing rope; the first side rod connects one end of the first cross rod adjacent to the first assembly rope and one end of the second cross rod adjacent to the first stabilizing rope; the second side rod connects another end of the first cross rod adjacent to the second assembly rope and another end of the second cross rod adjacent to the second stabilizing rope.

As a further improved technical solution of the present invention, a plurality of the support frames are provided and disposed at intervals along an extension direction of the rope structure; the plurality of support frames include a first support frame located in a middle of the rope structure and a plurality of second support frames disposed on two sides of the first support frame along the extension direction of the rope structure; an area of the first support frame is larger than an area of the second support frame.

As a further improved technical solution of the present invention, at a connection of the rope structure and the beam structure, the stabilizing ropes are located between the first assembly rope and the second assembly rope.

As a further improved technical solution of the present invention, the rope structure further includes a plurality of anchors; ends of the assembly ropes and ends of the stabilizing ropes are fixed to the beam structure through the anchors; each of the assembly ropes and the stabilizing ropes has a tension force towards a respective end thereof.

As a further improved technical solution of the present invention, the support frame is connected to the rope structure through a plurality of connecting components; the connecting component includes a buckle, a holding block and a nut; the buckle and the holding block are fixedly connected through the nut; the buckle and the holding block form a through hole through which one of the assembly ropes and the stabilizing ropes is configured to pass.

As a further improved technical solution of the present invention, the basic structures include a plurality of upright columns and a plurality of wind-resistant assemblies; the wind-resistant assemblies are disposed at intervals between adjacent upright columns; the beam structures are installed to the upright columns.

As a further improved technical solution of the present invention, the beam structure includes a base and an inclinable beam; the base is fixed to the upright column; the driving device includes a rotary driving machine and a motor; the motor provides power to the rotary driving machine; the inclinable beam and the rotary driving machine are coaxially and rotatably installed to the base.

Compared with the existing technology, the beneficial effects of the flexible photovoltaic tracking bracket of the present invention are as follows.

The present invention adopts a four-rope structure, and is provided with the assembly ropes for supporting a photovoltaic module and the stabilizing ropes located below the assembly ropes. The stabilizing ropes include the first stabilizing rope and the second stabilizing rope which are disposed along the left-right direction. The first stabilizing rope has an arc shape that curves in the upper right direction, and/or the second stabilizing rope has an arc shape that curves in the upper left direction. When the assembly ropes rotate under the drive of the driving device, the pre-stressed force of the bottommost stabilizing rope (such as the first stabilizing rope) can generate a supporting force to the upper left or the upper right. A moment formed by the supporting force around a center of rotation of the photovoltaic module can overcome a moment formed by a center of gravity of the entire system not being at the center of rotation, thereby ensuring the stability of the entire row of photovoltaic modules. As a result, all the photovoltaic modules installed on the assembly ropes are on the same plane and are not easily twisted, which ensures the power generation and also overcomes the self-weight of the photovoltaic modules to make the outer edges of all photovoltaic modules flush and beautiful in appearance.

Another stabilizing rope (such as the second stabilizing rope) can generate resistance to the force exerted on the front of the photovoltaic module by wind and support the photovoltaic module upward to overcome its gravity, thereby improving wind resistance.

The present invention can also improve the smoothness of the rotation of the entire rope structure, reduce the stress on the inclinable beam, save materials for the inclinable beam, and reduce costs. Besides, the present invention can also reduce the current of the motor and ensure the service life of the motor.

### BRIEF DESCRIPTION OF DRAWINGS

FIG. 1 is a schematic structural view of a flexible photovoltaic tracking bracket in accordance with a specific embodiment of the present invention;
FIG. 2 is an enlarged structural view of area A in FIG. 1;
FIG. 3 is an enlarged structural view of area B in FIG. 1;
FIG. 4 is an enlarged structural view of area C in FIG. 1;
FIG. 5 is a schematic structural view of the flexible photovoltaic tracking bracket in accordance with the specific embodiment of the present invention;
FIG. 6 is an enlarged structural schematic view of area E in FIG. 5;
FIG. 7 is a schematic top view of a rope structure in accordance with a specific embodiment of the present invention;
FIG. 8 is an enlarged structural view of area F in FIG. 7;
FIG. 9 is an enlarged structural view of area G in FIG. 7;
FIG. 10 is a schematic structural view of a support frame in accordance with a specific embodiment of the present invention;
FIG. 11 is an exploded schematic view of an anchor in accordance with a specific embodiment of the present invention;
FIG. 12 is a schematic assembly view of a connecting component in accordance with a specific embodiment of the present invention;
FIG. 13 is an exploded schematic view of the connecting component in accordance with a specific embodiment of the present invention;
FIG. 14 is a schematic assembly view of a beam structure and a driving device in accordance with a specific embodiment of the present invention; and
FIG. 15 is an exploded schematic view of the beam structure and the driving device in accordance with a specific embodiment of the present invention.

### DETAILED DESCRIPTION

Exemplary embodiments of the present invention will be described in detail below with reference to the accompanying drawings. If there are several specific embodiments, features of these embodiments may be combined with each other provided there is no conflict. When the description refers to the drawings, the same numbers in different drawings refer to the same or similar elements, unless otherwise stated. The following description of exemplary embodiments does not represent all embodiments consistent with the present invention. Rather, they are merely examples of devices, products and/or methods consistent with aspects of the present invention as recited in the claims of the present invention.

The terminologies used in the present invention are only for the purpose of describing specific embodiments, and are not intended to limit the protection scope of the present invention. The singular forms "a", "said", and "the" used in the specification and claims of the present invention are also intended to include plural forms unless the context clearly indicates other meanings.

It should be understood that the terms "first", "second" and similar words used in the specification and claims of the present invention do not represent any order, quantity or importance, but are only used to distinguish different components. Similarly, "an" or "a" and other similar words do not mean a quantity limit, but mean that there is at least one. Unless otherwise noted, "front", "rear", "top", "bottom" and similar words are for ease of description only and are not limited to one location or one spatial orientation. Similar words such as "include" or "comprise" mean that elements or objects appear before "include" or "comprise" cover elements or objects listed after "include" or "comprise" and their equivalents, and do not exclude other elements or objects. The term "a plurality of" mentioned in the present disclosure includes two or more.

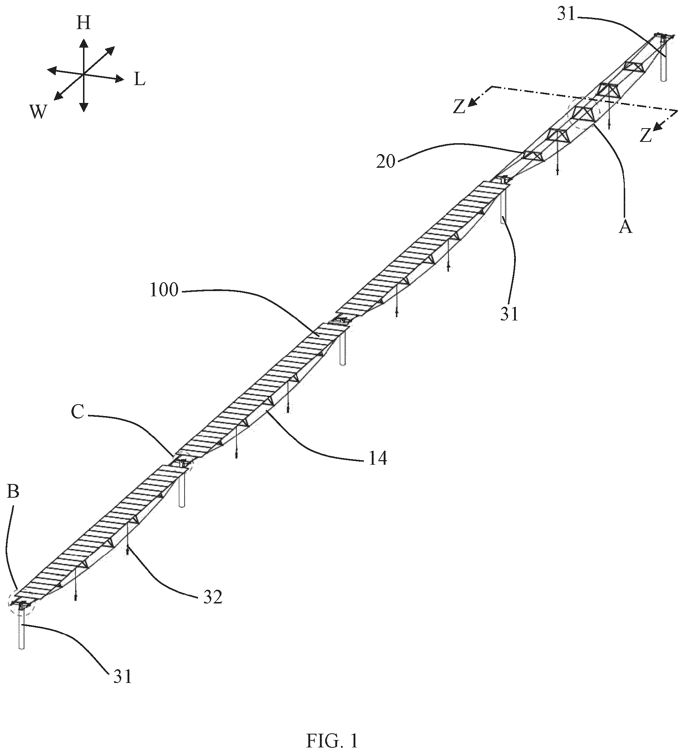

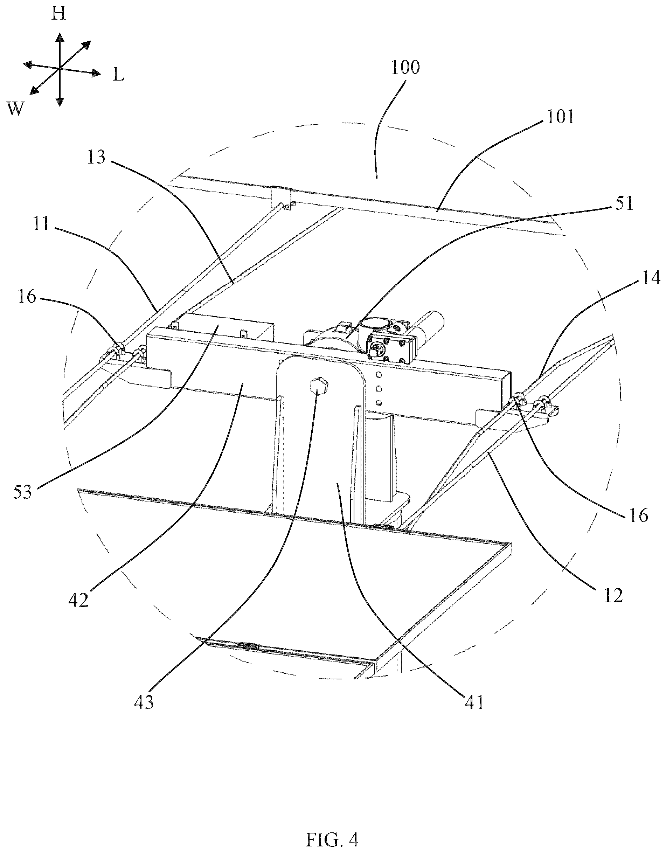

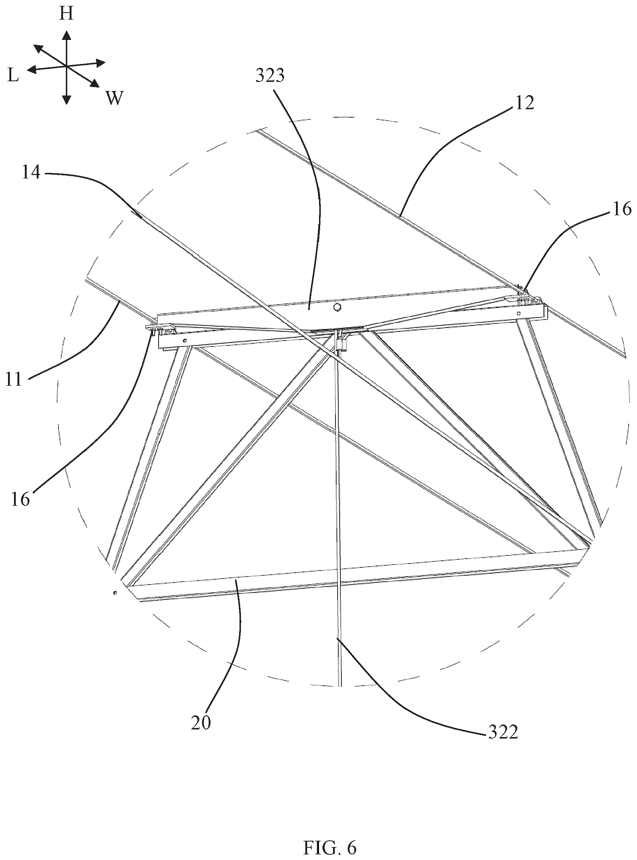

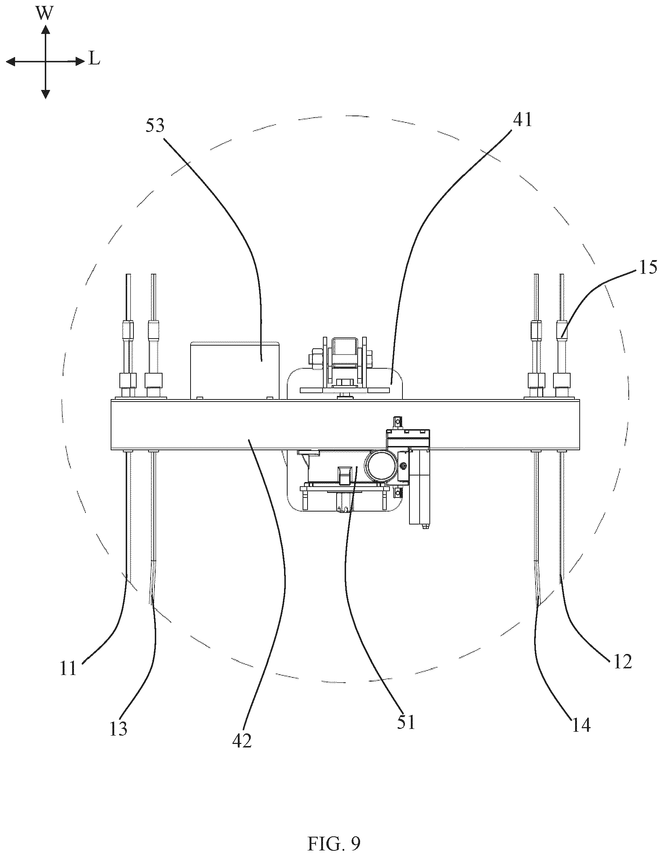

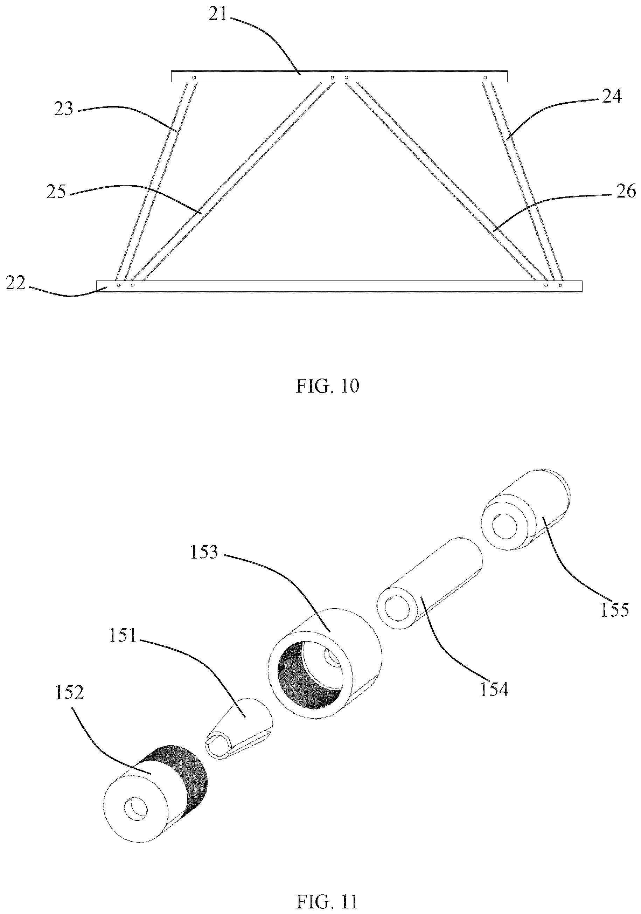

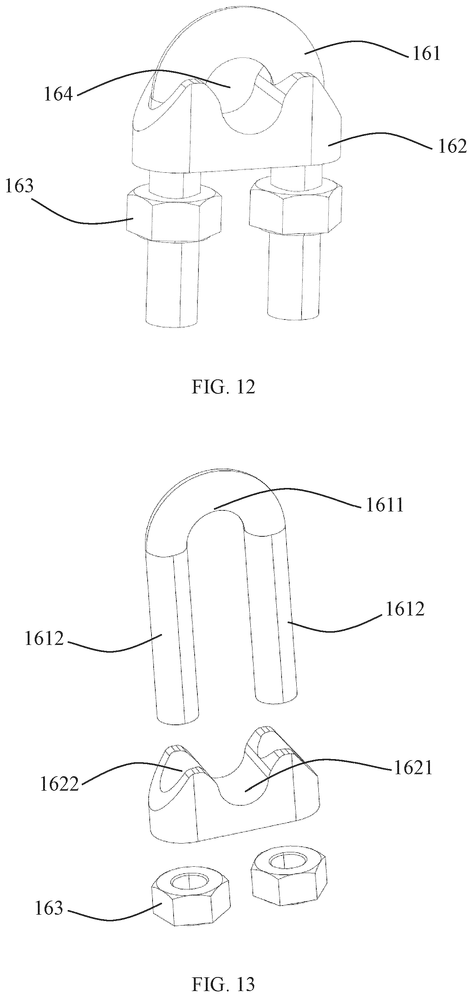

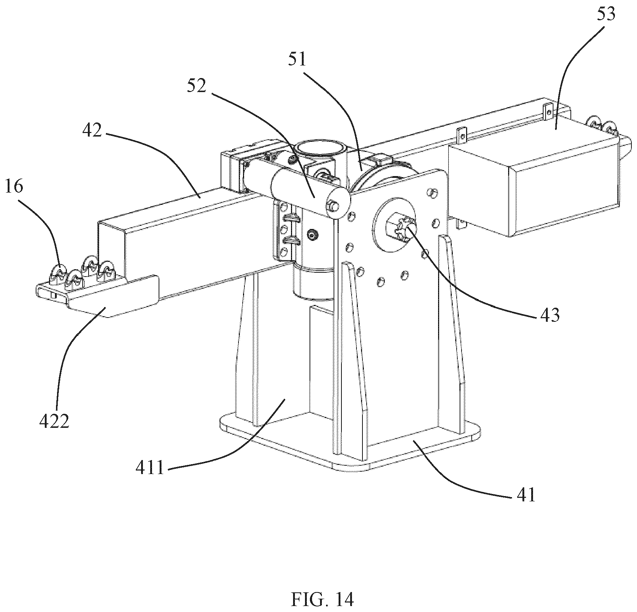

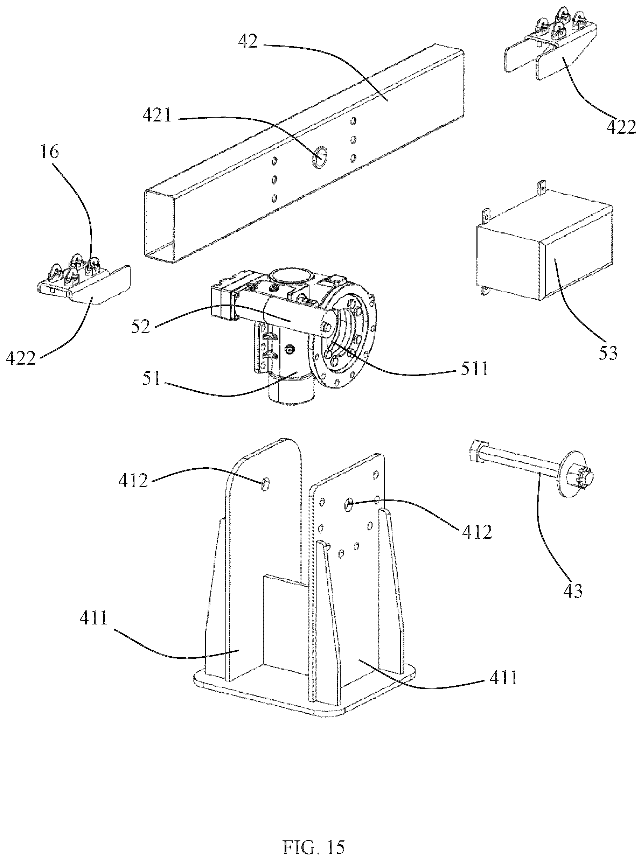

Referring to FIG. 1 to FIG. 15, this embodiment discloses a flexible photovoltaic tracking bracket which includes a plurality of base structures, a plurality of beam structures, a plurality of driving devices, a plurality of rope structures and a plurality of support frames 20. The plurality of basic structures are fixed to a ground at intervals. Each basic structure is equipped with one beam structure and one driving device. The driving device is installed to the beam structure. The rope structure connects adjacent beam structures. A plurality of photovoltaic modules 100 are mounted on the rope structure. The driving device is used to drive an inclinable beam of the beam structure to rotate around an axis, thereby driving the rope structure and the photovoltaic modules 100 to rotate synchronously.

To facilitate the description of the embodiment of the present invention, referring to FIG. 1, a length direction of the photovoltaic modules 100, that is, a left-right direction or a transverse direction of the rope structure, is marked as L. A width direction of the photovoltaic modules 100, that is, a longitudinal direction or an extension direction of the rope structure, is marked as W. A thickness direction of the photovoltaic modules 100, that is, a top-bottom direction of the rope structure, is marked as H. The three directions in FIG. 1 are perpendicular to one another.

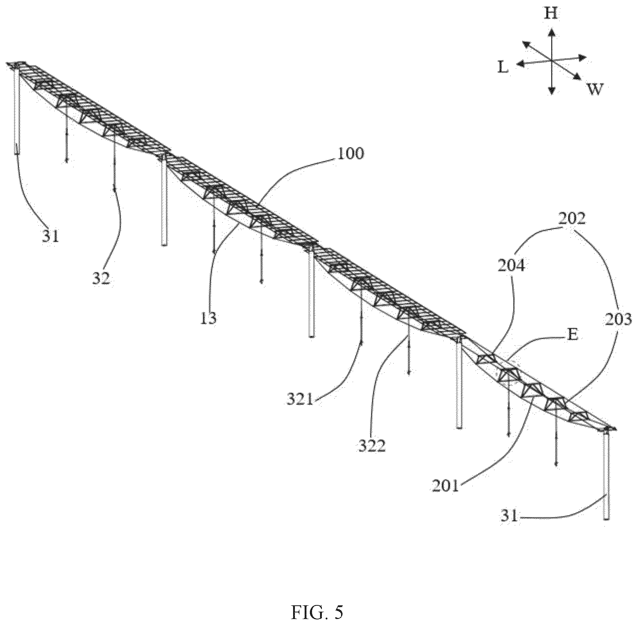

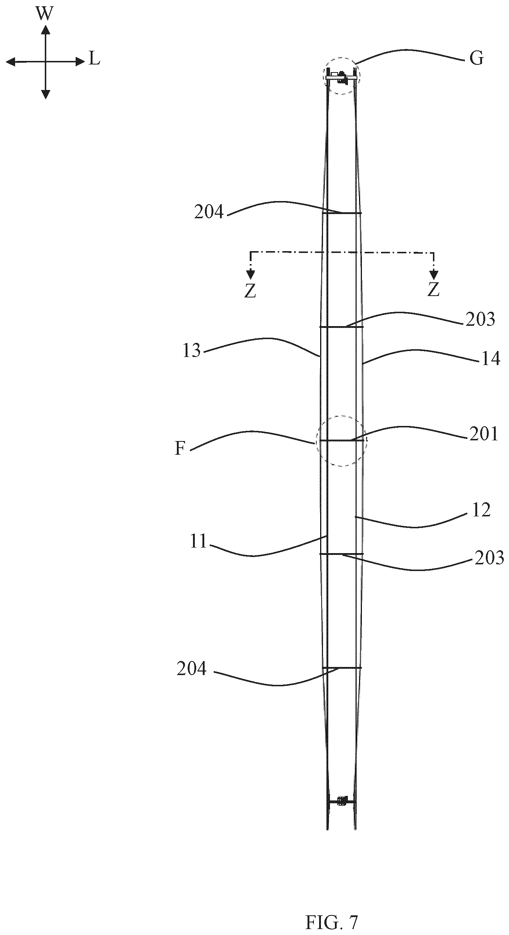

Referring to FIG. 1, FIG. 2, FIG. 5, FIG. 7 and FIG. 8, the rope structure includes assembly ropes and stabilizing ropes which are located below the assembly ropes. The stabilizing ropes here are underneath the relative assembly ropes. When the flexible photovoltaic tracking bracket is located on a slope or a mountain, the stabilizing ropes are located obliquely below the assembly ropes, which is also within the protection scope of the technical solution. The assembly ropes are configured to be fixedly connected to the photovoltaic modules 100. Furthermore, in this embodiment, at least two assembly ropes and at least two stabilizing ropes are provided respectively. The assembly ropes include a first assembly rope 11 and a second assembly rope 12 which are disposed in the left-right direction (the L direction). The stabilizing ropes include a first stabilizing rope 13 and a second stabilizing rope 14 which are disposed in the left-right direction (the L direction). The first assembly rope 11 and the second assembly rope 12 are arranged in parallel. The support frames 20 are installed inside the rope structure, and the support frames 20 connect the first assembly rope 11, the second assembly rope 12, the first stabilizing rope 13 and the second stabilizing rope 14. The first stabilizing rope 13 has an arc shape that curves in an upper right direction; and/or, the second stabilizing rope 14 has an arc shape that curves in an upper left direction. That is, in the length direction (the L direction) of the photovoltaic modules 100, both the first stabilizing rope 13 and the second stabilizing rope 14 have an arc shape that is bent toward an outside of the assembly ropes, as shown in FIG. 7. In the thickness direction (the H direction) of the photovoltaic modules 100, the first stabilizing rope 13 and the second stabilizing rope 14 both have a curved arc shape with two ends bent upwardly, as shown in FIG. 1 and FIG. 5. The specific arc size and radius of curvature are adjustable according to the on-site environmental conditions and bearing capacity needs of the project site.

With this arrangement, when the assembly ropes rotate driven by the driving device, the pre-stressed force of the bottommost stabilizing rope (such as the first stabilizing rope 13) can generate an upward supporting force. A moment formed by the supporting force around a center of gravity of the photovoltaic modules 100 can overcome or offset a moment formed by the center of gravity of the photovoltaic modules 100 not being at a center of rotation. If this moment is not overcome, the photovoltaic modules 100 will be twisted after being used for a period of time, causing the photovoltaic modules 100 in a middle position and a position adjacent to the basic structure to be out of the same plane, affecting the power generation. The technical solution of the present invention can ensure that all the photovoltaic modules 100 are kept on a same plane. The stabilizing rope on another side (such as the second stabilizing rope 14) can generate resistance to the force exerted on the front of the module by wind and support the photovoltaic modules 100 upward to overcome its gravity, thereby improving the wind resistance.

Here, the first stabilizing rope 13 having an arc shape that curves in the upper right direction, and the second stabilizing rope 14 having an arc shape that curves in the upper left direction, are based on a fact that the first stabilizing rope 13 is disposed on a left side, and the second stabilizing rope 14 is disposed on a right side. If the left and right positions of the first stabilizing rope 13 and the second stabilizing rope 14 are simply changed, that is, the first stabilizing rope 13 is disposed on the right side, and the second stabilizing rope 14 is disposed on the left side, then the first stabilizing rope 13 has an arc shape that curves in the upper left direction, and the second stabilizing rope 14 has an arc shape that curves in the upper right direction. These two scenarios should be regarded as equivalent technical features or technical solutions.

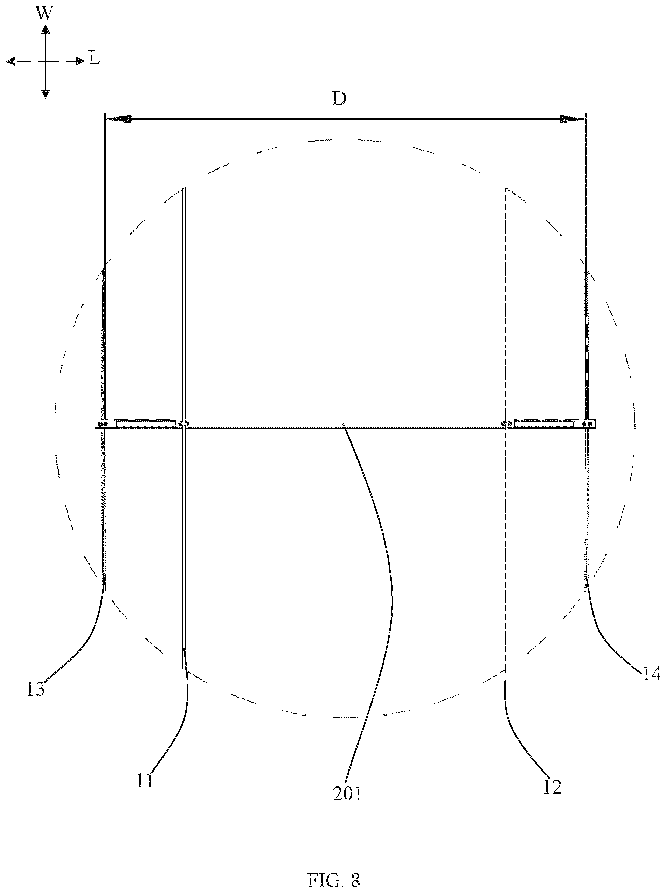

In this embodiment, and according to the present invention, when viewed in a direction perpendicular to a plane where the first assembly rope 11 and the second assembly rope 12 are located, the assembly ropes are located between the first stabilizing rope 13 and the second stabilizing rope 14, as shown in FIG. 7. Such an arrangement can ensure that the rope structure maintains good stability within a large rotation range, making the entire row of photovoltaic modules 100 less likely to be twisted and ensuring the power generation. In addition, due to the relatively long distance between the stabilizing ropes and the assembly ropes, the anti-torsional performance of the entire rope structure can also be improved. Here, the assembly ropes being located between the first stabilizing rope 13 and the second stabilizing rope 14 means that two assembly ropes are completely located between the first stabilizing rope 13 and the second stabilizing rope 14 laterally, or that the two assembly ropes are located between a maximum lateral distance D between the first stabilizing rope 13 and the second stabilizing rope 14, as shown in FIG. 8.

In an example not being part of the present invention, as viewed along the direction perpendicular to the plane where the first assembly rope 11 and the second assembly rope 12 are located, the first stabilizing rope 13 and the second stabilizing rope 14 are located between two assembly ropes (i.e., the first assembly rope 11 and the second assembly rope 12).

In this embodiment, based on a cross-section of the rope structure, that is, the cross-section along the Z-Z line in FIG. 1 and FIG. 7, the first stabilizing rope 13 and the second stabilizing rope 14 are symmetrical with respect to a mid-perpendicular line perpendicular to a connecting line connecting the first assembly rope 11 and the second assembly rope 12, so that the force of the flexible photovoltaic tracking bracket rotating in the east-west direction (the L direction) is balanced.

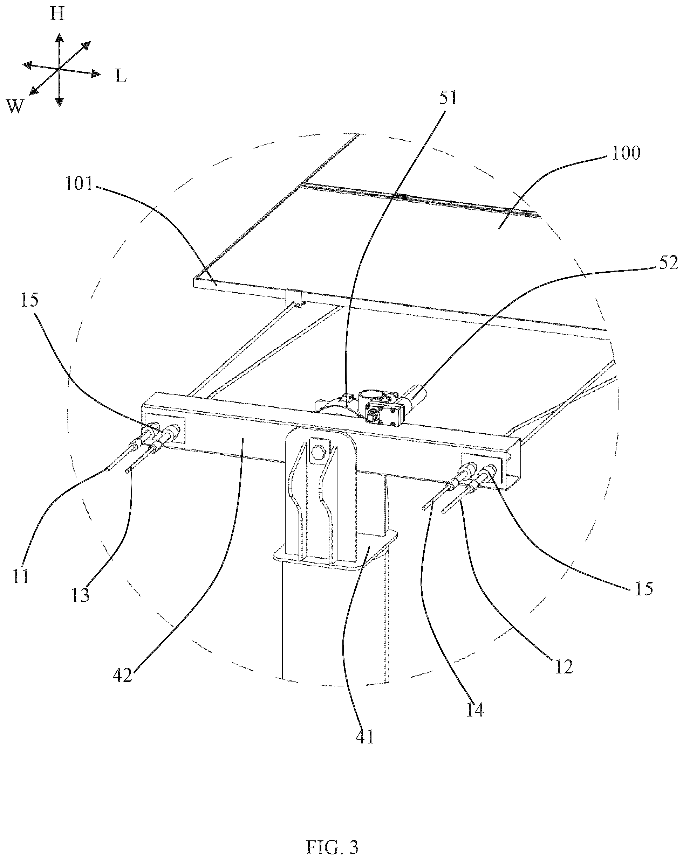

Furthermore, referring to FIG. 3, FIG. 4 and FIG. 9, at a connection between the rope structure and the beam structure, the stabilizing ropes are located between the assembly ropes. Specifically, at the connection between the rope structure and the beam structure, the first stabilizing rope 13 and the second stabilizing rope 14 are located between the first assembly rope 11 and the second assembly rope 12. Moreover, the first stabilizing rope 13 and the first assembly rope 11 are located at a same height. The second stabilizing rope 14 and the second assembly rope 12 are located at a same height. Corresponding to the installation location of the photovoltaic modules 100 in the rope structure, the first assembly rope 11 and the second assembly rope 12 are located between the first stabilizing rope 13 and the second stabilizing rope 14. With this arrangement, the stabilizing rope at the connection with the beam structure can simultaneously generate an upward supporting force and an inward tightening force on the inclined upward stabilizing rope between adjacent beam structures. The stabilizing rope will not easily expand outward even though the central bend is located outside, thereby further improving the overall stability of the structure and the rotational smoothness of the rope structure.

Referring to FIG. 3, FIG. 9 and FIG. 11, the rope structure further includes a plurality of anchors 15. The ends of the assembly ropes and the stabilizing ropes are fixed to the beam structures through the anchors 15. The anchor 15 includes a jacket 151, a fixing cylinder 152, a locking cylinder 153, a connecting tube 154 and an installation tube 155. The jacket 151 clamps the assembly rope or the stabilizing rope. The fixing cylinder 152 is sleeved on an outer periphery of the jacket 151 and contacts the beam structure. The locking cylinder 153 is fixedly connected to the fixing cylinder 152 and locks the jacket 151 so as to fix the assembly rope or the stabilizing rope. The connecting tube 154 is connected to an end of the locking cylinder 153 away from the fixing cylinder 152. The installation tube 155 is fixed to an end of the connecting tube 154 away from the locking cylinder 153. The assembly rope or the stabilizing rope is at least partially exposed on a side of the installation tube 155 away from the connecting tube 154. Furthermore, the jacket 151 is disposed separately to clamp the assembly rope or the stabilizing rope on opposite radial sides of the assembly rope or the stabilizing rope. An outer wall of the fixing cylinder 152 is provided with external threads, and an inner wall of the locking cylinder 153 is provided with corresponding internal threads so that the two can be fixedly connected and apply pressure to the jacket 151 located in the fixing cylinder 152 to lock the assembly rope or the stabilizing rope. The anchors 15 are used to fix the ends of the assembly ropes and the stabilizing ropes, so that when the assembly ropes and the stabilizing ropes are installed, an outward tensile force is applied and maintained at both ends. By tensioning the assembly ropes and the stabilizing ropes and having the assembly ropes and the stabilizing ropes having tension forces toward their respective ends, the stability of the rope structure and the supporting force for the photovoltaic modules 100 can be improved.

Referring to FIG. 1, FIG. 2, FIG. 5, FIG. 6, FIG. 7 and FIG. 10, the support frames 20 are installed on the rope structure and are spaced between adjacent beam structures for connecting the assembly ropes and stabilizing ropes, and supporting the photovoltaic modules 100. The support frame 20 includes a first cross rod 21, a second cross rod 22, a first side rod 23 and a second side rod 24. The first cross rod 21 is parallel to the second cross rod 22, and is located above the second cross rod 22. A length of the first cross rod 21 is smaller than a length of the second cross rod 22. The first side rod 23 and the second side rod 24 connect the ends on a same side of the first cross rod 21 and the second cross rod 22, respectively. Furthermore, the first cross rod 21 connects the first assembly rope 11 and the second assembly rope 12. The second cross rod 22 connects the first stabilizing rope 13 and the second stabilizing rope 14. The first side rod 23 connects an end of the first cross rod 21 adjacent to the first assembly rope 11 and an end of the second cross rod 22 adjacent to the first stabilizing rope 13. The second side rod 24 connects another end of the first cross rod 21 adjacent to the second assembly rope 12 and another end of the second cross rod 22 adjacent to the second stabilizing rope 14. Furthermore, the quadrilateral formed by the first cross rod 21, the second cross rod 22, the first side rod 23 and the second side rod 24 is a trapezoid. An angle between the first side rod 23 and the second cross rod 22, and an angle between the second side rod 24 and the second cross rod 22 are both less than 90°. In some embodiments, the angle between the first side rod 23 and the second cross rod 22, and the angle between the second side rod 24 and the second cross rod 22 are equal. That is, the trapezoid formed by the first cross rod 21, the second cross rod 22, the first side rod 23 and the second side rod 24 is an isosceles trapezoid and has a symmetrical structure. In other embodiments, the angle between the first side rod 23 and the second cross rod 22, and the angle between the second side rod 24 and the second cross rod 22 are not equal. With this arrangement, when the inclination angles of the assembly ropes on which the photovoltaic modules 100 are installed are too large, the first side rod 23 and the second side rod 24 can effectively support the assembly ropes and the photovoltaic modules 100. The photovoltaic modules 100 will not sag in an arc and cause distortion, thereby improving the structure stability of the bracket.

Furthermore, referring to FIG. 1, FIG. 2, FIG. 5, FIG. 6, FIG. 7 and FIG. 10, the support frame 20 further includes a first reinforcing rod 25 and a second reinforcing rod 26. The first reinforcing rod 25 and the second reinforcing rod 26 are disposed in the quadrilateral formed by the first cross rod 21, the second cross rod 22, the first side rod 23 and the second side rod 24 to enhance the structural strength and stability of the support frame 20. In this embodiment, the first reinforcing rod 25 connects the first cross rod 21 and the second cross rod 22. The second reinforcing rod 26 also connects the first cross rod 21 and the second cross rod 22. One end of the first reinforcing rod 25 connected to the second cross rod 22 is located adjacent to the first side rod 23. One end of the second reinforcing rod 26 connected to the second cross rod 22 is located adjacent to the second side rod 24. Another end of the first reinforcing rod 25 connected to the first cross rod 21 and another end of the second reinforcing rod 26 connected to the first cross rod 21 are located adjacent to each other, and located in the middle of the first cross rod 21. In some embodiments, the first reinforcing rod 25 and the second reinforcing rod 26 are arranged symmetrically, and the entire support frame 20 has a symmetrical structure. In other embodiments, the first reinforcing rod 25 and the second reinforcing rod 26 are arranged asymmetrically, and one or more reinforcing rods may be provided. The present application does not limit the number and arrangement of reinforcing rods, which can be set according to specific actual conditions.

In some embodiments, the support frame 20 is a cross-structured non-quadrilateral shape. In other embodiments, the support frame 20 is also configured as a three-dimensional structure. As long as the support frame 20 connects the assembly ropes and the stabilizing ropes on a cross section along the thickness direction of the photovoltaic modules 100, it can play the same role.

In this embodiment, each rod of the support frame 20 is made of U-shaped steel to facilitate the mutual connection between the rods, and holes are provided to facilitate the installation of fasteners for fixation.

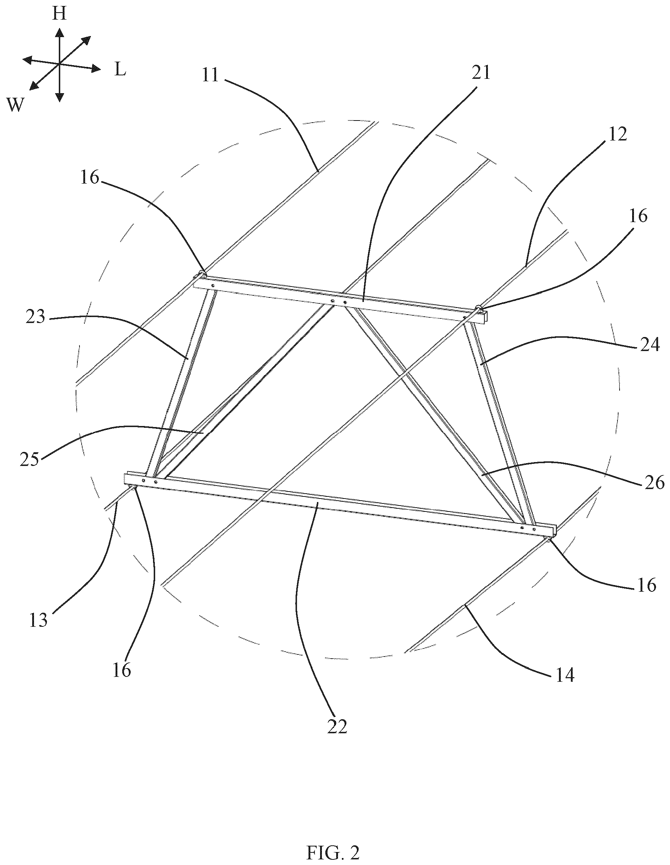

Referring to FIG. 2, FIG. 6, FIG. 12 and FIG. 13, the support frame 20 is connected to the rope structure through a plurality of connecting components 16. The connecting component 16 includes a buckle 161, a holding block 162 and a plurality of nuts 163. The buckle 161 and the holding block 162 are fixedly connected through the nuts 163. Moreover, the buckle 161 cooperates with the holding block 162 to form a through hole 164 through which one of the assembly ropes and the stabilizing ropes passes. Specifically, the buckle 161 is a U-shaped buckle, including an upper arc portion 1611 and two fixing portions 1612 provided at two ends of the upper arc portion 1611. The holding block 162 includes a lower arc portion 1621 and two fourth through holes 1622 provided at two ends of the lower arc portion 1621. The upper arc portion 1611 and the lower arc portion 1621 cooperate to form the through hole 164 for one of the assembly ropes and the stabilizing ropes to pass through. The fixing portions 1612 pass through the fourth through holes 1622, and the nuts 163 are used on the other side of the holding block 162 to fix the outer periphery of the fixing portion 1612 and abut against the holding block 162, thereby achieving the fixation of the connecting components 16, and the connection between the support frame 20 and the rope structure. In this embodiment, the connecting components 16 are provided on the first cross rod 21 and the second cross rod 22. Moreover, the through hole 164 of the connecting component 16 on the first cross rod 21 is located on a side of the first cross rod 21 relatively away from the second cross rod 22. The through hole 164 of the connecting component 16 on the second cross rod 22 is located on a side of the second cross rod 22 away from the first cross rod 21. That is, in the thickness direction of the photovoltaic module 100, the support frame 20 is located between the assembly ropes and the stabilizing ropes.

Referring to FIG. 1, FIG. 5 and FIG. 7, the plurality of support frames 20 are arranged at intervals along the extension direction (the W direction) of the rope structure. The plurality of support frames 20 include a first support frame 201 located in the middle of the rope structure and a plurality of second support frames 202 disposed on two sides of the first support frame 201 along the extension direction (the W direction) of the rope structure. An area of the first support frame 201 is larger than an area of each of second support frames 202. The plurality of second support frames 202 include two first sub-support frames 203 and two second sub-support frames 204. The two first sub-support frames 203 are located on two sides of the first support frame 201, and are symmetrical with respect to the first support frame 201. The two second sub-support frames 204 are located on two sides of the first support frame 201 and are symmetrical with respect to the first support frame 201. The second sub-support frame 204 is disposed away from the first support frame 201 relative to the first sub-support frame 203. An area of the first sub-support frame 203 is larger than an area of the second sub-support frame 204. In this embodiment, the maximum lateral distance D between the first stabilizing rope 13 and the second stabilizing rope 14 is a distance between them at the first support frame 201.

Referring to FIG. 1, FIG. 3, FIG. 4, FIG. 5, FIG. 6, FIG. 9, FIG. 14 and FIG. 15, the basic structure of the flexible photovoltaic tracking bracket includes a plurality of upright columns 31 and a plurality of wind-resistant assemblies 32. The upright columns 31 are disposed on the ground at intervals. The wind-resistant assemblies 32 are spaced between adjacent upright columns 31. The beam structure is installed on the upright column 31. The beam structure includes a base 41 and an inclinable beam 42. The base 41 is fixed on the upright column 31. The driving device includes a rotary driving machine 51 and a motor 52. The motor 52 provides power to the rotary driving machine 51. The inclinable beam 42 and the rotary driving machine 51 are coaxially and rotatably installed on the base 41. Specifically, the base 41 includes two mounting plates 411 arranged in parallel. The inclinable beam 42 and the rotary driving machine 51 are installed between the two mounting plates 411, and the rotating driving machine 51 and the inclinable beam 42 are fixed. The mounting plate 411 defines a first mounting hole 412. The inclinable beam 42 defines a second mounting hole 421. The rotary driving machine 51 defines a third mounting hole 511. A rotating shaft 43 is used to pass through the first mounting hole 412, the second mounting hole 421 and the third mounting hole 511. The inclinable beam 42 and the rotary driving machine 51 are coaxially installed on the base 41, so that the rotary driving machine 51 can drive the inclinable beam 42 to rotate around a rotating axis 43 on the base 41. The driving device further includes a control box 53. The control box 53 is fixed to the inclinable beam 42 to control the rotary driving machine 51. The control box 53 and the inclinable beam 42 can be fixedly connected through a hoop. The wind-resistant assembly 32 includes a wind-resistant column 321, a wind-resistant rope 322 and a wind-resistant cross rod 323. The wind-resistant column 321 is fixed on the ground. The wind-resistant cross rod 323 is connected to the assembly rope through the connecting component 17. The wind-resistant rope 322 connects the wind-resistant column 321 and the wind-resistant cross rod 323. The wind-resistant assembly 32 is provided to effectively resist negative wind.

Compared with the traditional triangular support, the flexible photovoltaic tracking bracket of this embodiment has obvious advantages. A four-rope structure is adopted, and the assembly ropes for supporting the photovoltaic modules 100 and the stabilizing ropes located below the assembly ropes are provided. The stabilizing ropes include the first stabilizing rope 13 and the second stabilizing rope 14 which are disposed in the left-right direction (the L direction). The first stabilizing rope 13 has an arc shape that curves in the upper right direction, and/or the second stabilizing rope 14 has an arc shape that curves in the upper left direction. When the assembly ropes rotate under the drive of the driving device, the pre-stressed force of the bottommost stabilizing rope (such as the first stabilizing rope 13) can generate an upper-left or upper-right supporting force. The moment formed by the supporting force around the rotation center of the photovoltaic modules 100 can overcome the moment caused by the center of gravity of the entire system not being at the rotation center, thereby ensuring the stability of the entire row of photovoltaic modules 100, so that all photovoltaic modules 100 installed on the assembly ropes are on the same plane and are not easily twisted. As a result, it ensures the power generation and can also overcome the self-weight of the module to make the outer edges of all photovoltaic modules 100 flush and beautiful in appearance. Another stabilizing rope (such as the second stabilizing rope 14 ) can generate resistance to the force exerted on the front of the module by wind and support the photovoltaic modules 100 upward to overcome its gravity, thereby improving wind resistance. The present application can improve the smoothness of the rotation of the entire rope structure, reduce the stress on the inclinable beam 42, save materials for the inclinable beam 42, and reduce costs. Besides, the present application can also reduce the current of the motor and ensure the service life of the motor.

Referring to FIG. 1, FIG. 3, FIG. 4, FIG. 5, FIG. 14 and FIG. 15, this embodiment discloses the flexible photovoltaic tracking bracket with four-span assemblies in each row, including five upright columns 31. Two sets of wind-resistant assemblies 32 and five trapezoidal support frames 20 are provided for each span assembly support. The five trapezoidal support frames 20 include the first support frame 201 and two sets of second support frames 202 which are symmetrically disposed on two sides of the first support frame 201. Each set of second support frames 202 includes a first sub-support frame 203 and a second sub-support frame 204. A lower end of the wind-resistant column 321 is set in a shape of a spiral anchor to sink into the ground more firmly. The two ends of the assembly ropes and the stabilizing ropes are respectively fixed on the beam structure located on two end upright columns 31, tensile forces are applied to them, and are fixed to the inclinable beam 42 using the anchors 15. As for the inclinable beam 42 across the central upright column 31, the assembly ropes and the stabilizing ropes are limited through the connecting component 16. In order to keep the assembly ropes and the stabilizing ropes at the same height on each inclinable beam 42, two extension components 422 are further provided across the inclinable beam 42 on the central upright column 31. The two extension components 422 are fixed on two ends of the inclinable beam 42. The assembly ropes and the stabilizing ropes are fixed to the extension components 422 through the connecting components 16.

In summary, compared with the existing technology, the flexible photovoltaic tracking bracket of the present invention has the following advantages: firstly, it reduces the eccentric torque generated by the modules when they rotate at a certain angle, making the modules less likely to be twisted and ensuring that the entire row of modules are located on the same plane. Besides, it also reduces the current of the rotary motor, avoids overcurrent during operation, and extends the service life of the motor. Secondly, it improves the stability and aesthetics. Compared with the traditional triangular support, it not only improves the stability of the structure, but also allows the edges of the entire row of modules to be in a straight line, thereby improving the appearance of the modules. Thirdly, the entire system can ensure excellent mechanical properties and stability under reasonable manufacturing costs. In summary, the flexible photovoltaic tracking bracket of the present invention improves the stability and reliability of the photovoltaic bracket by solving the problems existing in the traditional flexible bracket, and has high practical value.

## Claims

1. A flexible photovoltaic tracking bracket, comprising:
a plurality of base structures (31, 32) fixed to a ground at intervals;
a plurality of beam structures (41, 42) correspondingly installed to the base structures;
a driving device (51, 52) installed to the beam structure and configured to drive the beam structure to rotate around an axis;
a rope structure connecting adjacent beam structures; the rope structure comprising assembly ropes and stabilizing ropes; the stabilizing ropes being located below the assembly ropes; the assembly ropes being configured to be fixedly connected to a plurality of photovoltaic modules (100); the assembly ropes comprising a first assembly rope (11) and a second assembly rope (12) which are disposed along a left-right direction; the stabilizing ropes comprising a first stabilizing rope (13) and a second stabilizing rope (14) which are disposed along the left-right direction; and
a support frame (20) connected to the assembly ropes and the stabilizing ropes;
**characterized in that**:
the first stabilizing rope (13) is in an arc shape that curves in an upper right direction, and/or, the second stabilizing rope (14) is in an arc shape that curves in an upper left direction; and,
as viewed in a direction perpendicular to a plane where the first assembly rope (11) and the second assembly rope (12) are located, the assembly ropes are located between the first stabilizing rope (13) and the second stabilizing rope (14).

2. The flexible photovoltaic tracking bracket according to claim 1, wherein as viewed along a cross section of the rope structure, the first stabilizing rope and the second stabilizing rope are symmetrical with respect to a mid-perpendicular line which is perpendicular to a connecting line connecting the first assembly rope and the second assembly rope.

3. The flexible photovoltaic tracking bracket according to claim 1 or 2, wherein the support frame (20) comprises a first cross rod (21), a second cross rod (22), a first side rod (23) and a second side rod (24); the first cross rod (21) connects the first assembly rope (11) and the second assembly rope (12); the second cross rod (22) connects the first stabilizing rope (13) and the second stabilizing rope (14); the first side rod (23) connects one end of the first cross rod (21) adjacent to the first assembly rope (11) and one end of the second cross rod (22) adjacent to the first stabilizing rope (13); the second side rod (24) connects another end of the first cross rod (21) adjacent to the second assembly rope (12) and another end of the second cross rod (22) adjacent to the second stabilizing rope (14).

4. The flexible photovoltaic tracking bracket according to claim 3, wherein a plurality of the support frames (20) are provided and disposed at intervals along an extension direction of the rope structure; the plurality of support frames (20) comprise a first support frame (201) located in a middle of the rope structure and a plurality of second support frames (202) disposed on two sides of the first support frame (201) along the extension direction of the rope structure; an area of the first support frame (201) is larger than an area of the second support frame (202).

5. The flexible photovoltaic tracking bracket according to claim 1, wherein at a connection of the rope structure and the beam structure, the stabilizing ropes are located between the first assembly rope (11) and the second assembly rope (12).

6. The flexible photovoltaic tracking bracket according to claim 1, wherein the rope structure further comprises a plurality of anchors (15); ends of the assembly ropes and ends of the stabilizing ropes are fixed to the beam structure through the anchors (15); each of the assembly ropes and the stabilizing ropes has a tension force towards a respective end thereof.

7. The flexible photovoltaic tracking bracket according to claim 1, wherein the support frame (20) is connected to the rope structure through a plurality of connecting components (16); the connecting component (16) comprises a buckle (161), a holding block (162) and a nut (163); the buckle (161) and the holding block (162) are fixedly connected through the nut (163); the buckle (161) and the holding block (162) form a through hole (164) through which one of the assembly ropes and the stabilizing ropes is configured to pass.

8. The flexible photovoltaic tracking bracket according to claim 1, wherein the base structures comprise a plurality of upright columns (31) and a plurality of wind-resistant assemblies (32); the wind-resistant assemblies (32) are disposed at intervals between adjacent upright columns (31); the beam structures are installed to the upright columns (31).

9. The flexible photovoltaic tracking bracket according to claim 8, wherein the beam structure comprises a base (41) and an inclinable beam (42); the base (41) is fixed to the upright column (31); the driving device comprises a rotary driving machine (51) and a motor (52); the motor (52) provides power to the rotary driving machine (51); the inclinable beam (42) and the rotary driving machine (51) are coaxially and rotatably installed to the base (41).

## Patentansprüche

1. Flexible photovoltaische Verfolgungsklammer, umfassend
eine Vielzahl von Basiskonstruktionen (31, 32), die in Intervallen am Boden befestigt sind;
eine Vielzahl von Trägerkonstruktionen (41, 42), die entsprechend an den Basiskonstruktionen angebracht sind;
eine Antriebsvorrichtung (51, 52), die an der Trägerkonstruktion angebracht und konfiguriert ist, um die Trägerkonstruktion zur Drehung um eine Achse anzutreiben;
eine Seilkonstruktion, die benachbarte Trägerkonstruktionen verbindet; wobei die Seilkonstruktion Montageseile und Stabilisierungsseile umfasst; wobei die Stabilisierungsseile sich unterhalb der Montageseile befinden; wobei die Montageseile konfiguriert sind, um fest mit einer Vielzahl von photovoltaischen Modulen (100) verbunden zu sein; wobei die Montageseile ein erstes Montageseil (11) und ein zweites Montageseil (12) umfassen, die entlang einer Links-Rechts-Richtung angeordnet sind; wobei die Stabilisierungsseile ein erstes Stabilisierungsseil (13) und ein zweites Stabilisierungsseil (14) umfassen, die entlang der Links-Rechts-Richtung angeordnet sind; und
einen Stützrahmen (20), der mit den Montageseilen und den Stabilisierungsseilen verbunden ist;
**dadurch gekennzeichnet, dass**:
das erste Stabilisierungsseil (13) eine Bogenform aufweist, die nach rechts oben verläuft, und/oder das zweite Stabilisierungsseil (14) eine Bogenform aufweist, die nach links oben verläuft;
und,
in einer Richtung senkrecht zu einer Ebene betrachtet, in der sich das erste Montageseil (11) und das zweite Montageseil (12) befinden, die Montageseile sich zwischen dem ersten Stabilisierungsseil (13) und dem zweiten Stabilisierungsseil (14) befinden.

2. Flexible photovoltaische Verfolgungsklammer nach Anspruch 1, wobei, betrachtet entlang einem Querschnitt der Seilkonstruktion, das erste Stabilisierungsseil und das zweite Stabilisierungsseil symmetrisch zu einer Mittelsenkrechten sind, die senkrecht zu einer Verbindungslinie steht, welche das erste Montageseil und das zweite Montageseil verbindet.

3. Flexible photovoltaische Verfolgungsklammer nach Anspruch 1 oder 2, wobei der Stützrahmen (20) eine erste Querstange (21), eine zweite Querstange (22), eine erste Seitenstange (23) und eine zweite Seitenstange (24) umfasst; die erste Querstange (21) das erste Montageseil (11) und das zweite Montageseil (12) verbindet; die zweite Querstange (22) das erste Stabilisierungsseil (13) und das zweite Stabilisierungsseil (14) verbindet; die erste Seitenstange (23) ein Ende der ersten Querstange (21) neben dem ersten Montageseil (11) und ein Ende der zweiten Querstange (22) neben dem ersten Stabilisierungsseil (13) verbindet; die zweite Seitenstange (24) ein weiteres Ende der ersten Querstange (21) neben dem zweiten Verbindungsseil (12) und ein weiteres Ende der zweiten Querstange (22) neben dem zweiten Stabilisierungsseil (14) verbindet.

4. Flexible photovoltaische Verfolgungsklammer nach Anspruch 3, wobei eine Vielzahl von Stützrahmen (20) vorgesehen ist, die in Intervallen entlang einer Erstreckungsrichtung der Seilkonstruktion angeordnet sind; die Vielzahl von Stützrahmen (20) einen ersten Stützrahmen (201), der sich in der Mitte der Seilkonstruktion befindet, und eine Vielzahl von zweiten Stützrahmen (202) umfasst, die auf beiden Seiten des ersten Stützrahmens (201) entlang der Erstreckungsrichtung der Seilkonstruktion angeordnet sind; eine Fläche des ersten Stützrahmens (201) größer ist als eine Fläche des zweiten Stützrahmens (202).

5. Flexible photovoltaische Verfolgungsklammer nach Anspruch 1, wobei an einer Verbindungsstelle der Seilkonstruktion und der Trägerkonstruktion die Stabilisierungsseile sich zwischen dem ersten Montageseil (11) und dem zweiten Montageseil (12) befinden.

6. Flexible photovoltaische Verfolgungsklammer nach Anspruch 1, wobei die Seilkonstruktion ferner eine Vielzahl von Verankerungen (15) umfasst; die Enden der Montageseile und die Enden der Stabilisierungsseile über die Verankerungen (15) an der Trägerkonstruktion befestigt sind; jedes der Montageseile und der Stabilisierungsseile eine Zugkraft in Richtung seines jeweiligen Endes aufweist.

7. Flexible photovoltaische Verfolgungsklammer nach Anspruch 1, wobei der Stützrahmen (20) über eine Vielzahl von Verbindungskomponenten (16) mit der Seilkonstruktion verbunden ist; wobei die Verbindungskomponente (16) eine Schnalle (161), einen Halteblock (162) und eine Mutter (163) umfasst; die Schnalle (161) und der Halteblock (162) über die Mutter (163) fest miteinander verbunden sind; die Schnalle (161) und der Halteblock (162) ein Durchgangsloch (164) bilden, durch das eines der Montageseile und der Stabilisierungsseile konfiguriert ist, hindurchzulaufen.

8. Flexible photovoltaische Verfolgungsklammer nach Anspruch 1, wobei die Basiskonstruktionen eine Vielzahl von aufrechten Säulen (31) und eine Vielzahl von windbeständigen Baugruppen (32) umfassen; die windbeständigen Baugruppen (32) in Intervallen zwischen benachbarten aufrechten Säulen (31) angeordnet sind; die Trägerkonstruktionen an den aufrechten Säulen (31) angebracht sind.

9. Flexible photovoltaische Verfolgungsklammer nach Anspruch 8, wobei die Trägerkonstruktion eine Basis (41) und einen neigbaren Träger (42) umfasst; die Basis (41) an der aufrechten Säule (31) befestigt ist; die Antriebsvorrichtung eine Drehantriebsmaschine (51) und einen Motor (52) umfasst; der Motor (52) die Drehantriebsmaschine (51) mit Energie versorgt; der neigbare Träger (42) und die Drehantriebsmaschine (51) koaxial und drehbar an der Basis (41) angebracht sind.

## Revendications

1. Support de suivi photovoltaïque flexible, comprenant :
une pluralité de structures de base (31, 32)
fixées au sol à intervalles ;
une pluralité de structures de poutre (41, 42) installées de manière correspondante aux structures de base ;
un dispositif d'entraînement (51, 52) installé sur la structure de poutre et conçu pour entraîner la structure de poutre en rotation autour d'un axe ;
une structure de câble reliant des structures de poutre adjacentes ; la structure de câble comprenant des câbles d'assemblage et des câbles de stabilisation ; les câbles de stabilisation étant situés sous les câbles d'assemblage ; les câbles d'assemblage étant conçus pour être reliés de manière fixe à une pluralité de modules photovoltaïques (100) ; les câbles d'assemblage comprenant un premier câble d'assemblage (11) et un second câble d'assemblage (12) qui sont disposés le long d'une direction gauche-droite ; les câbles de stabilisation comprenant un premier câble de stabilisation (13) et un second câble de stabilisation (14) qui sont disposés le long de la direction gauche-droite ; et
un cadre de soutien (20) relié aux câbles d'assemblage et aux câbles de stabilisation ;
**caractérisé en ce que** :
le premier câble de stabilisation (13) est en forme d'arc qui se courbe dans une direction supérieure droite, et/ou, le second câble de stabilisation (14) est en forme d'arc qui se courbe dans une direction supérieure gauche ;
et, vus dans une direction perpendiculaire à un plan où le premier câble d'assemblage (11) et le second câble d'assemblage (12) sont situés, les câbles d'assemblage sont situés entre le premier câble de stabilisation (13) et le second câble de stabilisation (14).

2. Support de suivi photovoltaïque flexible selon la revendication 1, dans lequel, vus le long d'une section transversale de la structure de câble, le premier câble de stabilisation et le second câble de stabilisation sont symétriques par rapport à une ligne médio-perpendiculaire qui est perpendiculaire à une ligne de liaison reliant le premier câble d'assemblage et le second câble d'assemblage.

3. Support de suivi photovoltaïque flexible selon la revendication 1 ou 2, dans lequel le cadre de soutien (20) comprend une première barre transversale (21), une seconde barre transversale (22), une première barre latérale (23) et une seconde barre latérale (24) ; la première barre transversale (21) relie le premier câble d'assemblage (11) et le second câble d'assemblage (12) ; la seconde barre transversale (22) relie le premier câble de stabilisation (13) et le second câble de stabilisation (14) ; la première barre latérale (23) relie une extrémité de la première barre transversale (21) adjacente au premier câble d'assemblage (11) et une extrémité de la seconde barre transversale (22) adjacente au premier câble de stabilisation (13) ; la seconde barre latérale (24) relie une autre extrémité de la première barre transversale (21) adjacente au second câble d'assemblage (12) et une autre extrémité de la seconde barre transversale (22) adjacente au second câble de stabilisation (14).

4. Support de suivi photovoltaïque flexible selon la revendication 3, dans lequel une pluralité de cadres de soutien (20) sont ménagées et disposées à intervalles le long d'une direction d'extension de la structure de câble ; la pluralité de cadres de soutien (20) comprend un premier cadre de soutien (201) situé au milieu de la structure de câble et une pluralité de seconds cadres de soutien (202) disposés de deux côtés du premier cadre de soutien (201) le long de la direction d'extension de la structure de câble ; une zone du premier cadre de soutien (201) est plus grande qu'une zone du second cadre de soutien (202).

5. Support de suivi photovoltaïque flexible selon la revendication 1, dans lequel au niveau d'une liaison de la structure de câble et de la structure de poutre, les câbles de stabilisation sont situés entre le premier câble d'assemblage (11) et le second câble d'assemblage (12).

6. Support de suivi photovoltaïque flexible selon la revendication 1, dans lequel la structure de câble comprend en outre une pluralité d'ancres (15) ; des extrémités des câbles d'assemblage et des extrémités des câbles de stabilisation sont fixées à la structure de poutre au travers des ancres (15) ; chacun des câbles d'assemblage et des câbles de stabilisation présente une force de tension vers une extrémité respective de celui-ci.

7. Support de suivi photovoltaïque flexible selon la revendication 1, dans lequel le cadre de soutien (20) est relié à la structure de câble au travers d'une pluralité de composants de liaison (16) ; le composant de liaison (16) comprend une boucle (161), un bloc de maintien (162) et un écrou (163) ; la boucle (161) et le bloc de maintien (162) sont reliés de manière fixe au travers de l'écrou (163) ; la boucle (161) et le bloc de maintien (162) forment un trou traversant (164) au travers duquel l'un des câbles d'assemblage et des câbles de stabilisation est conçu pour passer.

8. Support de suivi photovoltaïque flexible selon la revendication 1, dans lequel les structures de base comprennent une pluralité de colonnes verticales (31) et une pluralité d'ensembles résistants au vent (32) ; les ensembles résistants au vent (32) sont disposés à intervalles entre des colonnes verticales adjacentes (31) ; les structures de poutre sont installées sur les colonnes verticales (31).

9. Support de suivi photovoltaïque flexible selon la revendication 8, dans lequel la structure de poutre comprend une base (41) et une poutre inclinable (42) ; la base (41) est fixée à la colonne verticale (31) ; le dispositif d'entraînement comprend une machine d'entraînement rotative (51) et un moteur (52) ; le moteur (52) fournit de l'énergie à la machine d'entraînement rotative (51) ; la poutre inclinable (42) et la machine d'entraînement rotative (51) sont installées de manière coaxiale et rotative sur la base (41).
